# EUROPEAN PATENT APPLICATION

(11) **EP 4 756 931 A1**
(43) Date of publication of application: **10.06.2026**
(21) Application number: 24849294.4
(22) Date of filing: 02.08.2024
(51) Int. Cl.: H01M 4/62, H01M 4/13, H01M 4/139

(54) **BINDER FOR LITHIUM-ION BATTERY POSITIVE ELECTRODE, SLURRY FOR FORMING LITHIUM-ION BATTERY POSITIVE ELECTRODE MIXTURE LAYER, POSITIVE ELECTRODE FOR LITHIUM-ION BATTERY, AND LITHIUM-ION BATTERY**

(30) Priority: 02.08.2023 JP 2023126642
(71) Applicant: Tosoh Corporation, Yamaguchi 746-8501 (JP)
(72) Inventor: TOUGOU, Eiichi, Ayase-shi, Kanagawa 252-1123 (JP); INOUE, Hiroshi, Yokkaichi-shi, Mie 510-8540 (JP); SHIMIZU, Yoshihisa, Yokkaichi-shi, Mie 510-8540 (JP); SHIWAKU, Rei, Ayase-shi, Kanagawa 252-1123 (JP)
(74) Representative: Novagraaf International SA
(86) International application number: PCT/JP2024/027690
(87) International publication number: WO 2025/028649

(57) **Abstract**

A binder for a lithium-ion battery positive electrode, being for binding a positive electrode active material, a conductive additive and a current collector in a lithium-ion battery, and comprising a chelating group-containing polymer and a flexible polymer.

## Description

### Technical Field

The present disclosure relates to a binder for a lithium-ion battery positive electrode, a slurry for forming a lithium-ion battery positive electrode mixture layer, a positive electrode for a lithium-ion battery and a lithium-ion battery.

### Background Art

Lithium-ion batteries have been widely used in recent years as power sources for electrical equipment and the like. Recently, the applications of lithium-ion batteries have also been expanding as power sources for electric vehicles. Along with improvements in properties such as higher capacity, higher output and improved cycle life, high safety is required.

Electrodes of lithium-ion batteries have a structure in which a porous body composed primarily of a powdery active material, a conductive additive and a binder is laminated and bound onto a current collector. Therefore, it is known that the performance of an electrode is greatly affected not only by the properties of the active material but also by the type of the binder.

Polyvinylidene fluoride (PVDF) has been widely used as a binder for positive electrodes. However, since it has been used with organic solvents such as N-methylpyrrolidone during electrode production, it has had drawbacks in that abatement equipment is required in a slurry preparation process and an electrode sheet-coating process, and solvent recovery equipment is required in an electrode sheet-drying process, resulting in an increase in auxiliary equipment associated with electrode production and leading to increased costs, and costs for purchasing and recovering organic solvents increase, thereby increasing running costs.

On the other hand, as aqueous binders dispersible and soluble in water without using organic solvents, the use of polyvinyl alcohol and methyl cellulose (e.g., see PTL 1), the use of xanthan gum (e.g., see PTL 2), the use of starch-type polysaccharides such as amylose and aminopectin (e.g., see PTLs 3 and 4), and the use of alginic acid and alginic acid derivatives (e.g., see PTLs 5 to 9) have been disclosed. Binders obtained by using an aqueous emulsion are preferable because abatement equipment is not required during electrode sheet production and the working environment is also improved.

Lithium composite oxides such as LiMn₂O₄, LiNi_{0.5}Mn_{1.5}O₄, LiNi_{0.5}Mn_{0.3}Co_{0.2}O₂, LiNi_{0.33}Mn_{0.33}Co_{0.33}O₂ and LiNi_{0.8}Mn_{0.1}Co_{0.1}O₂ have generally been used as positive electrode active materials. However, with these lithium composite oxides, it has been known that, during charge and discharge, manganese and nickel in the active material dissolve and become ionized, precipitating and depositing onto the negative electrode, thereby causing deterioration in cycle characteristics and rate characteristics.

### Citation List

### Patent Literature

PTL 1: Japanese Unexamined Patent Application Publication No. Sho 53-41732 (JP 53-41732 A)
PTL 2: Japanese Unexamined Patent Application Publication No. 2003-68292 (JP 2003-68292 A)
PTL 3: Japanese Unexamined Patent Application Publication No. 2008-27904 (JP 2008-27904 A)
PTL 4: International Publication No. 2012/133120 (WO 2012/133120 A)
PTL 5: Japanese Unexamined Patent Application Publication No. Hei 10-92415 (JP 10-92415 A)
PTL 6: Japanese Unexamined Patent Application Publication No. 2001-15114 (JP 2001-15114 A)
PTL 7: Japanese Unexamined Patent Application Publication No. 2014-96238 (JP 2014-96238 A)
PTL 8: Japanese Unexamined Patent Application Publication No. 2014-195018 (JP 2014-195018 A)
PTL 9: Japanese Unexamined Patent Application Publication No. 2015-191862 (JP 2015-191862 A)

### Summary of Invention

### Technical Problem

An object of the present disclosure is to provide a binder for a lithium-ion battery positive electrode, the binder being rich in flexibility (bendability) and resistant to formation of cracks during winding, being excellent in workability during electrode preparation, and being capable of suppressing precipitation and deposition of manganese from a positive electrode active material onto a negative electrode active material, thereby making it possible to prepare a battery having extended cycle life; a slurry for forming a lithium-ion battery positive electrode mixture layer which is one for forming a positive electrode mixture layer including the binder; and a positive electrode for a lithium-ion battery and a lithium-ion battery including the binder. In other words, an object of the present disclosure is to provide a binder for a lithium-ion battery positive electrode, the binder being excellent in workability during electrode preparation, being rich in flexibility and resistant to formation of cracks, and making it possible to prepare a battery having extended cycle life, and a slurry for forming a lithium-ion battery positive electrode mixture layer, a positive electrode for a lithium-ion battery and a lithium-ion battery that use the binder.

### Solution to Problem

In the present disclosure, it has been found that the above object can be achieved by using a chelating group-containing polymer and a flexible polymer as a binder.

That is, the aspects of the present invention are as set forth in the claims, and the present disclosure is as follows.
[1] A binder for a lithium-ion battery positive electrode, being for binding a positive electrode active material, a conductive additive and a current collector in a lithium-ion battery, and comprising a chelating group-containing polymer and a flexible polymer.
[2] The binder according to [1], wherein, in the chelating group-containing polymer, a chelating group is bonded to a polymer through a covalent bond and/or an ionic bond. (In other words, the binder according to [1], wherein, in the chelating group-containing polymer, a chelating group is bonded to a polymer through at least one bond selected from the group consisting of a covalent bond and an ionic bond.)
[3] The binder for a lithium-ion battery positive electrode according to [1] or [2], wherein the flexible polymer is at least one selected from the group consisting of polyvinylidene fluoride and a copolymer thereof, and a polymer containing an aromatic vinyl monomer and an aliphatic conjugated diene monomer.
[4] The binder for a lithium-ion battery positive electrode according to any one of [1] to [3], wherein the flexible polymer is a dried product of an aqueous emulsion (product obtained by drying an aqueous emulsion).
[5] A slurry for forming a lithium-ion battery positive electrode mixture layer, being for forming a positive electrode mixture layer including the binder for a lithium-ion battery positive electrode according to any one of [1] to [4], and comprising a positive electrode active material, a conductive additive, a chelating group-containing polymer, a flexible polymer and water.
[6] A positive electrode for a lithium-ion battery, comprising the binder for a lithium-ion battery positive electrode according to any one of [1] to [4].
[7] A lithium-ion battery comprising the positive electrode for a lithium-ion battery according to [6].
[8] A method for producing a composition (mixture) usable for producing the binder for a lithium-ion battery positive electrode according to any one of [1] to [4], the method comprising mixing a flexible polymer in the form of an aqueous polymer emulsion with a chelating group-containing polymer.

With regard to the reason why the above object is achieved by the binder for a lithium-ion battery positive electrode according to one aspect of the present disclosure, the inventors of the present invention presume as follows.

That is, by using a chelating group-containing polymer as a binder, chelating groups capture manganese ions and nickel ions eluted from a positive electrode active material in the vicinity of the positive electrode. This produces an effect of suppressing precipitation and deposition of manganese onto a negative electrode active material. As a result, excellent charge-discharge characteristics and extended cycle life can be achieved. On the other hand, by using a flexible polymer (more preferably, a dried product of an aqueous polymer emulsion) in combination as a binder, adhesion of a positive electrode mixture layer to a current collector is improved, and peeling of the positive electrode mixture layer can be suppressed even when the positive electrode mixture layer is formed to have a large thickness. In addition, since flexibility is imparted to the positive electrode, formation of cracks during winding can also be suppressed. Thus, since formation of cracks during winding can be suppressed, by using the binder for a lithium-ion battery positive electrode according to one aspect of the present disclosure, it becomes possible to efficiently produce a positive electrode by applying a winding process during production of the positive electrode, thereby making it possible to provide excellent workability during preparation of the positive electrode.

### Advantageous Effects of Invention

According to the present disclosure, it becomes possible to provide a binder for a lithium-ion battery positive electrode, the binder being rich in flexibility (bendability) and resistant to formation of cracks during winding, being excellent in workability during electrode preparation, and being capable of suppressing precipitation and deposition of manganese from a positive electrode active material onto a negative electrode active material, thereby making it possible to prepare a battery having extended cycle life; a slurry for forming a lithium-ion battery positive electrode mixture layer which is one for forming a positive electrode mixture layer including the binder; and a positive electrode for a lithium-ion battery and a lithium-ion battery including the binder.

That is, according to the present disclosure, it becomes possible to provide a binder for a lithium-ion battery positive electrode, being excellent in workability during positive electrode preparation, being rich in flexibility and resistant to formation of cracks, and making it possible to prepare an electrode having extended cycle life, and a slurry for forming a lithium-ion battery positive electrode mixture layer. In addition, by using these, it becomes possible to provide a positive electrode for a lithium-ion battery and a lithium-ion battery having extended cycle life.

### Description of Embodiments

Hereinafter, the present disclosure will be described in detail with reference to preferred embodiments. The present disclosure includes any combinations of the configurations disclosed in this description, and also includes any combinations of the numerical values disclosed in this description.

A binder for a lithium-ion battery positive electrode according to one aspect of the present disclosure comprises a chelating group-containing polymer.

A chelating group refers to a ligand having a plurality of coordination sites, and is a functional group capable of forming a chelate with a polyvalent metal ion. As the chelating group, an aminocarboxylic acid-based chelating group, an aminophosphonic acid-based chelating group, or a polyamine-based chelating group is suitably used. Examples of the aminocarboxylic acid-based chelating functional group include an iminodiacetate group, a nitrilotriacetate group, an N,N-bis(2-hydroxyethyl)glycine group, a hydroxyethyliminodiacetate group, an ethylenediaminetriacetate group, an ethylenediaminetetraacetate group, a 1,2-bis(2-aminophenoxy)ethanetetraacetate group, a 1,2-diaminocyclohexanetetraacetate group, a diethylenetriaminepentaacetate group, a (2-hydroxyethyl)ethylenediaminetriacetate group, a bis(2-aminoethyl)ethyleneglycoltetraacetate group and a triethylenetriaminehexaacetate group. As such an aminocarboxylic acid-based chelating functional group, at least one kind selected from the groups exemplified herein can be suitably used. Examples of the aminophosphonic acid-based chelating group include an aminomethylphosphonate group and a nitrilotris(methylphosphonate) group. As such an aminophosphonic acid-based chelating group, at least one kind selected from the groups exemplified herein can be suitably used. Examples of the polyamine-based chelating group include a polyethyleneimine group, a polyamidoamine dendrimer group and a tetrakis(2-pyridylmethyl)ethylenediamine group. As such a polyamine-based chelating group, at least one kind selected from the groups exemplified herein can be suitably used. When the chelating group contains a carboxylic acid or a phosphonic acid, such an acidic functional group is preferably in a monovalent salt form such as an alkali metal salt or an ammonium salt, rather than in a proton form, because the monovalent salt form readily undergoes ion exchange with heavy-metal ions.

Such a chelating group is preferably at least one kind selected from an aminocarboxylic acid-based chelating group, an aminophosphonic acid-based chelating group, and alkali metal salts thereof. From the viewpoint that a larger number of chelating groups can be introduced more efficiently, such a chelating group is preferably at least one kind selected from the group consisting of an iminodiacetate group, an ethylenediaminetetraacetate group, a nitrilotris(methylphosphonate) group, a nitrilotriacetate group, an ethylenediaminetriacetate group, an aminomethylphosphonate group, and groups each consisting of an alkali metal salt thereof; more preferably at least one kind selected from the group consisting of an iminodiacetate group, an ethylenediaminetetraacetate group, a nitrilotris(methylphosphonate) group, and groups each consisting of an alkali metal salt thereof; and particularly preferably at least one kind selected from the group consisting of a disodium iminodiacetate group, a tetrasodium ethylenediaminetetraacetate group and a nitrilotris(trisodium methylphosphonate) group.

The amount of the chelating group contained in the chelating group-containing polymer is 0.2 mmol/g or more and 6 mmol/g or less, preferably 0.5 mmol/g or more and 5 mmol/g or less. It is preferable that the content of the chelating group fall within this range because, in such a case, heavy-metal ions can be quickly captured and the amount of heavy-metal ions captured is also sufficient. The content of such a chelating group is not particularly limited, and the content may be appropriately determined in accordance with the type of the chelating group. For example, when the chelating group is one containing a nitrogen element, such as an aminocarboxylic acid-based chelating group or an aminophosphonic acid-based chelating group, and the polymer portion (the polymer portion into which the chelating group is introduced) is one having a structure not containing a nitrogen element, a method may be adopted in which elemental analysis is performed on the chelating group-containing polymer to determine the content ratio of nitrogen atoms, and the molar content of the chelating group is calculated from the content. The method of elemental analysis referred to herein is not particularly limited. For example, a method can be adopted in which MICRO CORDER JM10 manufactured by J-SCIENCE LAB Co., Ltd. is used as a measuring apparatus, a sample is completely combusted in an oxygen atmosphere, and CO₂, H₂O and N₂ generated are measured with a thermal conductivity detector to determine the amount of each element.

The polymer into which the chelating group is introduced (compound constituting the polymer portion of the chelating group-containing polymer, excluding the chelating group) is not particularly limited. Examples of the polymer into which the chelating group is introduced include vinyl polymers, polyamides, polyesters, polyurethanes, polysaccharides and cellulose. The polymer is preferably hydrophilic because it is preferably soluble in water at the time when the chelating group is introduced. Such a polymer (the polymer portion of the chelating group-containing polymer) is more preferably a polysaccharide, further preferably at least one kind selected from an acidic polysaccharide and a basic polysaccharide, particularly preferably at least one kind selected from the group consisting of alginic acid, sulfated alginic acid, and salts thereof, and most preferably alginic acid.

The molecular weight of the chelating group-containing polymer is preferably 10,000 to 1,000,000, more preferably 50,000 to 1,000,000, in terms of weight-average molecular weight. It is preferable that the weight-average molecular weight fall within this range because, in such a case, a sufficient mechanical strength can be ensured, and the viscosity during electrode coating can be adjusted to fall within a range that does not cause problems (range that does not affect workability). The "weight-average molecular weight" of the chelating group-containing polymer referred to herein can be a value measured under conditions in which an HLC-8320GPC manufactured by Tosoh Corporation is used as a measuring apparatus, TSKgel GMPXL is used as a column, a 0.1 mol/L aqueous phosphate buffer solution at pH 8.0 is used as an eluent, polyethylene glycol is used as a standard sample, and the flow rate is 1 mL/min.

In the present disclosure, the term "chelating group-containing polymer" refers to a polymer in which a chelating group is bonded to the polymer through a covalent bond and/or an ionic bond. In other words, in the present disclosure, the term "chelating group-containing polymer" refers to a polymer in which a chelating group is bonded to the polymer through at least one kind of bond selected from the group consisting of a covalent bond and an ionic bond.

When the chelating group is bonded to the polymer through a covalent bond, one example of the structure thereof is represented by the following General Formula (1).

PS-X-A-CL (1)

(In the above formula, PS represents an acidic polysaccharide or a basic polysaccharide; X represents a group represented by -O- or -N(R)-; R represents a hydrogen atom or a hydrocarbyl group having 1 to 6 carbon atoms; A represents an organic group having 3 to 30 carbon atoms; and CL represents an organic group having 1 to 30 carbon atoms and containing a chelating group.)

In General Formula (1), PS represents an acidic polysaccharide or a basic polysaccharide. The acidic polysaccharide refers to a polysaccharide containing a functional group exhibiting acidity, such as a carboxyl group or a sulfate group. Examples of the acidic polysaccharide include at least one kind selected from the group consisting of carboxymethyl cellulose, gellan gum, alginic acid, sulfated alginic acid, carrageenan, xanthan gum, chondroitin sulfate, heparin, hyaluronic acid, pectic acid, gum arabic, agar, tragacanth gum, and salts thereof. The acidic polysaccharide may be used in a mixture with a neutral polysaccharide or another water-soluble polymer, within a range that does not significantly reduce the amount of chelating group introduced. Among these acidic polysaccharides, at least one kind selected from the group consisting of alginic acid, sulfated alginic acid, and salts thereof is preferable, because of excellent oxidation resistance and high mechanical strength. Alginic acid is composed of mannuronic acid and guluronic acid. The ratio between mannuronic acid and guluronic acid constituting alginic acid is arbitrary. In this embodiment, the alginic acid may be either alginic acid having a high mannuronic acid ratio, which forms a flexible gel, or alginic acid having a high guluronic acid ratio, which provides a rigid gel. On the other hand, the basic polysaccharide refers to a polysaccharide containing a functional group exhibiting basicity, such as an amino group. Examples of the basic polysaccharide include chitosan.

Sulfated polysaccharides obtained by introducing a sulfate group into the above polysaccharides can also be suitably used as PS in General Formula (1). A sulfate group, including its basic salt and neutral salt, is a strongly acidic cation-exchange group capable of ion exchange. Therefore, the "sulfate group" as referred to herein may be in the form of a basic salt or may be in the form of a neutral salt. The position at which the sulfate group is introduced is a hydroxyl group site contained in the structure of the polysaccharide. The sulfate group is introduced by substitution of hydrogen of the hydroxyl group with -SO₃H. The amount of the sulfate group introduced into the polysaccharide is preferably 0.5 to 5.0 mmol/g. It is preferable that the amount of the sulfate group introduced fall within the above range because, in such a case, oxidation resistance is improved while maintaining the amount of chelating group introduced.

In General Formula (1), X represents a group represented by -O- or -N(R)-, and R represents a hydrogen atom or a hydrocarbyl group having 1 to 6 carbon atoms. Examples of the hydrocarbyl group having 1 to 6 carbon atoms include a methyl group, an ethyl group, an n-propyl group, an isopropyl group, an n-butyl group, a sec-butyl group, a tert-butyl group, an isobutyl group, an n-pentyl group, a sec-pentyl group, a tert-pentyl group, an isopentyl group, a neopentyl group, a 3-pentyl group, a cyclopentyl group, an n-hexyl group, an isohexyl group, a sec-hexyl group, a tert-hexyl group, a neohexyl group, a 2-methylpentyl group, a 3-methylpentyl group, a 1,2-dimethylbutyl group, a 2,2-dimethylbutyl group, a 1-ethylbutyl group, a 2-ethylbutyl group and a cyclohexyl group. As the hydrocarbyl group having 1 to 6 carbon atoms, at least one kind selected from the group consisting of these exemplified groups can be suitably used.

In General Formula (1), A is an organic group having 3 to 30 carbon atoms, and divalent hydrocarbylene groups such as a propylene group, a butylene group, and a phenylene group, and groups formed by introducing a hydroxyl group or the like into such a hydrocarbylene group are preferably used. Examples of such an organic group that can be used as A in Formula (1) include 2-hydroxypropylene, 2,2-bis[4-(hydroxypropyloxy)phenyl]propane, 1,2-bis(2-hydroxypropyloxy)ethyl and 1,3-bis(2-hydroxypropyloxy)benzene. The term "organic group" as used in the present disclosure refers to, in addition to divalent hydrocarbylene groups as described above, groups containing, as constituent atoms, a hetero atom such as oxygen, nitrogen, phosphorus or sulfur, together with carbon and hydrogen (in addition to carbon and hydrogen).

In General Formula (1), CL is required only to contain a chelating group. CL has 1 to 30 carbon atoms and may contain, in addition to carbon and hydrogen, hetero atoms such as oxygen, nitrogen, phosphorus and sulfur. As CL, the above-described chelating group may be used alone; optionally, a hydrocarbyl group such as a methyl group, an ethyl group or a phenyl group, an ester group such as an acetic acid ester, an ether group such as an ethyl ether, an amide group such as a benzamide, or a sulfonic acid ester group such as a toluenesulfonic acid ester may be bonded to the chelating group.

When the chelating group is bonded to the polymer through a covalent bond, a polymer having a structure represented by the following General Formula (2), in which the chelating group is introduced into a graft chain, can also be suitably used as the binder according to one aspect of the present disclosure.

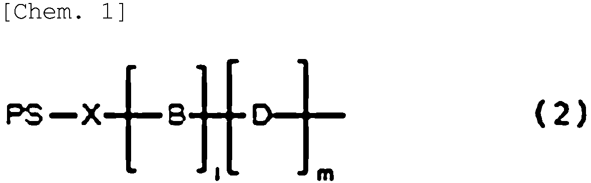

(In the formula, PS and X have the same meanings as PS and X in General Formula (1), B represents a vinyl monomer residue containing a chelating group and having 4 to 30 carbon atoms, D represents a vinyl monomer residue not containing a chelating group and having 4 to 30 carbon atoms, and l and m each independently represent an integer of 10 to 500.)

In General Formula (2), the chelating group is introduced into a graft polymer chain, and is bonded to an acidic polysaccharide or a basic polysaccharide through a covalent bond. Examples of the chelating group include the same chelating groups as those of the chelating group-containing polymer of General Formula (1). Examples of the vinyl monomer residue having a chelating group represented by B in General Formula (2) include a reaction product of an epoxy group in a vinyl monomer residue having an epoxy group, such as glycidyl methacrylate, with an amino group in a compound having an amino group and a chelating group. Examples of the vinyl monomer residue not containing a chelating group and having 4 to 30 carbon atoms represented by D in General Formula (2) include not only a vinyl monomer residue in which an epoxy group in a vinyl monomer residue having an epoxy group, such as glycidyl methacrylate, remains as it is, and a vinyl monomer residue that has undergone ring opening by hydrolysis, but also a vinyl monomer residue not having an epoxy group.

Whether the chelating group is bonded to the polymer through a covalent bond can be confirmed, for example, by measuring an increase in weight before and after introduction of the chelating group.

When the chelating group is bonded to the polymer through an ionic bond, a structure in which a polymer having an anionic functional group and a chelating group-containing compound having a cationic functional group (e.g., a compound having an amino group and a chelating group) are bonded by an ionic bond is exemplified. Examples of the anionic functional group include a carboxyl group, a sulfonate group, a phosphate group and a phenolic hydroxyl group. Specific examples of the polymer having an anionic functional group include poly(acrylic acid), poly(methacrylic acid), poly(itaconic acid), poly(maleic acid), an ethylene-maleic acid copolymer, an isobutene-maleic acid copolymer, a methyl vinyl ether-maleic acid copolymer, a styrene-maleic acid copolymer, poly(fumaric acid), poly(vinylsulfonic acid), poly(styrenesulfonic acid), poly(2-sulfoethyl methacrylate), poly(2-sulfoethyl acrylate), poly(3-sulfopropyl methacrylate), poly(3-sulfopropyl acrylate), poly(4-sulfobutyl methacrylate), poly(4-sulfobutyl acrylate), poly(2-acrylamido-2-methylpropanesulfonic acid), poly(2-methacrylamido-2-methylpropanesulfonic acid), and vinyl polymers composed of copolymers thereof; and acidic polysaccharides such as carboxymethyl cellulose, gellan gum, alginic acid, sulfated alginic acid, carrageenan, xanthan gum, chondroitin sulfate, heparin, hyaluronic acid, pectic acid, gum arabic, agar and tragacanth gum. These polymers may be copolymerized with other monomers in an acceptable range regarding oxidation resistance and reduction resistance. Among these polymers, acidic polysaccharides having high oxidation resistance are preferably used as a binder for a positive electrode, and alginic acid and sulfated alginic acid are further preferably used. On the other hand, as a binder for a negative electrode, poly(acrylic acid), poly(styrenesulfonic acid), copolymers thereof, alginic acid and sulfated alginic acid, which are excellent in reduction resistance, are preferably used.

Examples of the chelating group-containing compound having a cationic functional group include chelating group-containing compounds containing an ammonium group, a phosphonium group, a sulfonium group, or the like. Specific examples of the compound include iminodiacetic acid, nitrilotriacetic acid, ethylenediaminetetraacetic acid, N,N-bis(2-hydroxyethyl)glycine, 1,2-diaminocyclohexanetetraacetic acid, diethylenetriaminepentaacetic acid, N-(2-hydroxyethyl)ethylenediaminetriacetic acid, bis(2-aminoethyl)ethyleneglycoltetraacetic acid, bis(2-aminophenyl)ethyleneglycoltetraacetic acid, N-(2-hydroxyethyl)iminodiacetic acid, tetrakis(2-pyridylmethyl) ethylenediamine, triethylenetetraminehexaacetic acid, aminomethylphosphonic acid, aminoethylphosphonic acid, aminopropylphosphonic acid, nitrilotris(methylphosphonic acid), and salts thereof. The acetate group and the phosphonate group in the above compounds are preferably in a monovalent salt form such as an alkali metal salt or an ammonium salt, rather than in a proton form, because the monovalent salt form readily undergoes ion exchange with heavy-metal ions.

Whether the chelating group is bonded to the polymer through an ionic bond can be confirmed, for example, by FT-IR measurement. When the presence or absence of bonding of the chelating group is confirmed by FT-IR measurement, for example, in the case where the chelating group-containing polymer is a compound obtained by reacting hydrogen ion-type alginic acid with a disodium iminodiacetate salt, the raw material, hydrogen ion-type alginic acid, exhibits an absorption at 1740 cm⁻¹ derived from the stretching vibration of the carbonyl of a carboxylic acid, whereas, in the compound after the reaction into which a disodium iminodiacetate salt has been introduced (the chelating group-containing polymer after the reaction), the absorption at 1740 cm⁻¹ disappears and a new absorption at 1600 cm⁻¹ derived from the stretching vibration of the carbonyl of a carboxylic acid salt originating from a disodium iminodiacetate salt can be confirmed. Therefore, by measuring such a change in absorption wavelength, the presence or absence of bonding (ionic bonding) of the chelating group introduced into the chelating group-containing polymer can be confirmed. As a method for the FT-IR measurement, a method may be adopted in which an FT-IR spectrum is measured by an ATR method using a Fourier transform infrared spectrophotometer (FT-IR) (SPECTRUM ONE, manufactured by PerkinElmer) as a measuring apparatus.

A method for producing such a chelating group-containing polymer is not particularly limited. For example, a method can be adopted in which a polymer having an anionic functional group (preferably, at least one kind selected from a carboxyl group, a sulfonate group and a sulfate group) is brought into contact with an acid to convert the anionic functional group into a hydrogen ion form, and subsequently brought into contact with a chelating group-containing compound having a cationic functional group (e.g., a compound having an amino group and a chelating group), thereby introducing a chelating group into the anionic polymer, to obtain a chelating group-containing polymer. As another method for producing a chelating group-containing polymer, for example, a method can be adopted in which an acidic polysaccharide and/or a basic polysaccharide are reacted with an epihalohydrin and/or a polyfunctional epoxy compound having 2 to 6 epoxy groups, and subsequently reacted with a chelating group-containing compound having a cationic functional group (e.g., a compound having an amino group and a chelating group), thereby introducing a chelating group into the acidic polysaccharide or the basic polysaccharide through a covalent bond, to obtain a chelating group-containing polymer. Examples of the epihalohydrin include epichlorohydrin, epibromohydrin, epiiodohydrin, and mixtures thereof. Examples of the polyfunctional epoxy compound having 2 to 6 epoxy groups include a bisphenol A diglycidyl ether, a bisphenol F diglycidyl ether, a resorcine diglycidyl ether, an ethylene glycol diglycidyl ether, a glycerin triglycidyl ether and 1,3-bis(oxiran-2-ylmethoxy)-2,2-bis[(oxiran-2-ylmethoxy)methyl]propane.

The binder for a lithium-ion battery positive electrode according to one aspect of the present disclosure comprises a flexible polymer.

The flexible polymer in such a binder is preferably a polymer (dried product of an aqueous emulsion) obtained using a state in which a polymer is dispersed in an aqueous medium as an emulsion (aqueous polymer emulsion). That is, from the viewpoint of improving binding properties, the flexible polymer is preferably a dried product of an aqueous emulsion (product obtained by drying an aqueous emulsion). The flexible polymer may be one obtained using a solution formed by dissolving a polymer in water.

The flexible polymer is not particularly limited; however, since one of the purposes of addition is to impart flexibility to the positive electrode, the flexible polymer is preferably a polymer rich in flexibility.

Specific examples of the flexible polymer include fluorine-based resins such as polyvinylidene fluoride, a vinylidene fluoride-hexafluoropropylene copolymer, a perfluoromethyl vinyl ether-tetrafluoroethylene copolymer, polytetrafluoroethylene and fluororubber; and hydrocarbon-based elastomers such as a styrene-butadiene copolymer and an ethylene-propylene copolymer. Preferred examples include polymers containing an aromatic vinyl monomer and an aliphatic conjugated diene monomer, such as polyvinylidene fluoride, a vinylidene fluoride-hexafluoropropylene copolymer and a styrene-butadiene copolymer. As the flexible polymer, a metal salt of polyacrylic acid can also be adopted as one preferred example. The flexible polymer is preferably at least one selected from a metal salt of polyacrylic acid, polyvinylidene fluoride and copolymers thereof, and a polymer containing an aromatic vinyl monomer and an aliphatic conjugated diene monomer; more preferably at least one selected from polyvinylidene fluoride and copolymers thereof, and a polymer containing an aromatic vinyl monomer and an aliphatic conjugated diene monomer; and further preferably at least one selected from polyvinylidene fluoride and copolymers thereof, and a copolymer containing at least a styrene monomer and a butadiene monomer. By this, a positive electrode prepared using the binder for a lithium-ion battery positive electrode according to one aspect of the present disclosure becomes richer in flexibility.

The molecular weight of the flexible polymer is 50,000 to 2,000,000, preferably 100,000 to 1,000,000, in terms of weight-average molecular weight. It is preferable that the weight-average molecular weight fall within this range because, in such a case, flexibility and sufficient mechanical strength can be ensured. As the "weight-average molecular weight" of the flexible polymer, a value measured using GPC as a measuring apparatus, selecting a solvent capable of dissolving the polymer as an eluent, and using polyethylene glycol as a standard sample can be adopted.

The term "aqueous" in the aqueous polymer emulsion refers to a medium containing water as a principal component; as components other than water, any organic compounds soluble in water, such as alcohols, ethers, esters, amines and amides, may be contained. The term "emulsion" in the aqueous polymer emulsion refers to a state in which fine particles are dispersed in a dispersion medium, and the size of the fine particles is on the order of several tens to several hundreds of nanometers. The state of dispersion of the polymer in the emulsion may be confirmed by the presence or absence of sedimentation under a stationary condition.

When an aqueous emulsion (hereinafter, in some cases, referred to as "aqueous polymer emulsion") is used to include the flexible polymer in the binder, the proportion (content) of the flexible polymer component in such an emulsion is preferably 20% by mass to 60% by mass (more preferably 30% by mass to 50% by mass). A method for preparing such an aqueous emulsion is not particularly limited, and a known method can be appropriately used. A commercial product may also be used as such an aqueous polymer emulsion.

The binder for a lithium-ion battery positive electrode includes a chelating group-containing polymer and a flexible polymer (preferably, a dried product of an aqueous polymer emulsion), and the ratio thereof is preferably, in terms of weight ratio, chelating group-containing polymer: flexible polymer (preferably, a dried product of an aqueous polymer emulsion (the mass of the solid content of the emulsion)) = 50 to 90:10 to 50 (more preferably, 60 to 80:20 to 40).

The content (compounding amount) of the binder according to one aspect of the present disclosure is preferably 1% to 20% by mass, more preferably 3% to 10% by mass, relative to the total amount of the active material, the binder and the conductive additive.

A mixture (composition) of the chelating group-containing polymer and the flexible polymer can be prepared by mixing the flexible polymer in the form of an aqueous polymer emulsion with the chelating group-containing polymer. By using the resulting mixture (composition), the slurry, the positive electrode and the lithium-ion battery described below can be efficiently prepared.

Since the binder according to one aspect of the present disclosure is rich in flexibility, it is capable of following volume changes of an electrode during charge and discharge, and can prevent cracking of the electrode due to such volume changes, peeling and detachment of an active material associated therewith, and destruction of conductive channels. Furthermore, the binder according to one aspect of the present disclosure, for example, has excellent affinity with an electrolyte solution and thus excellent ionic conductivity, and also has excellent oxidation resistance and reduction resistance, thereby ensuring stability of the electrode. Therefore, the binder according to one aspect of the present disclosure has excellent performance as a binder for a lithium-ion battery electrode.

Furthermore, in the binder according to one aspect of the present disclosure, a chelating group is introduced. By this chelating group, manganese ions and the like eluted from a positive electrode active material are captured in the vicinity of the positive electrode and/or the negative electrode, thereby suppressing precipitation and deposition onto a negative electrode active material. As a result, excellent charge-discharge characteristics and extended cycle life can be achieved.

The binder for a lithium-ion battery positive electrode according to one aspect of the present disclosure only needs to contain a chelating group-containing polymer and a flexible polymer, and may further contain other components in addition to these components. Thus, the binder for a lithium-ion battery positive electrode according to one aspect of the present disclosure may contain other components in addition to the chelating group-containing polymer and the flexible polymer. Such other components are not particularly limited, and known components usable for binders in the field of lithium-ion batteries (e.g., known binding agents) may be appropriately used. Suitable examples of such other components include a silane coupling agent and an inorganic component (e.g., colloidal silica, condensed phosphate or alumina sol).

In the present disclosure, the positive electrode active material is not particularly limited except that it is capable of insertion and extraction of lithium ions, and examples thereof include transition metal oxides such as CuO, Cu₂O, MnO₂, MoO₃, V₂O₅, CrO₃, Fe₂O₃, Ni₂O₃ and CoO₃; and lithium composite oxides such as Li_{X}CoO₂, Li_{X}NiO₂, Li_{X}MnO₂, Li_{X}Mn₂O₄, LiNi_{X}Co_{(1-X)}O₂, LiNi_{X}Mn_{(2-X)}O₄, LiMnₐNi_{b}Co_{c}O₂ (a + b + c = 1) and LiFePO₄. Thus, as the positive electrode active material, for example, at least one of the transition metal oxides and the lithium composite oxides described above may be used. Here, as the transition metal oxides, at least one kind selected from the group consisting of CuO, Cu₂O, MnO₂, MoO₃, V₂O₅, CrO₃, Fe₂O₃, Ni₂O₃ and CoO₃ is preferable, and as the lithium composite oxides, at least one kind selected from the group consisting of Li_{X}CoO₂, Li_{X}NiO₂, Li_{X}MnO₂, Li_{X}Mn₂O₄, LiNi_{X}Co_{(1-X)}O₂, LiNi_{X}Mn_{(2-X)}O₄, LiMnₐNi_{b}Co_{c}O₂ (a + b + c = 1) and LiFePO₄ is preferable. Among these, as the positive electrode active material, a composite oxide of lithium and at least one kind selected from transition metals such as Co, Ni and Mn is more preferable. Specific examples of preferable positive electrode active materials include one or more kinds selected from the group consisting of LiCoO₂, LiNiO₂, LiMnO₂, LiMn₂O₄, LiNi_{X}Co_{(1-X)}O₂, LiNi_{X}Mn_{(2-X)}O₄ and LiMnₐNi_{b}Co_{c}O₂ (a + b + c = 1). These lithium composite oxides may be doped with a small amount of elements such as fluorine, boron, Al, Cr, Zr, Mo and Fe. Positive electrode active materials in which the particle surfaces of the lithium composite oxides are surface-treated with carbon, MgO, Al₂O₃, SiO₂, or the like may also be used. Thus, as the lithium composite oxide, those doped with at least one kind of element selected from the group consisting of fluorine, boron, Al, Cr, Zr, Mo and Fe may be used, and furthermore, those in which the particle surfaces of the above-described lithium composite oxides are surface-treated with at least one kind selected from the group consisting of carbon, MgO, Al₂O₃ and SiO₂ may also be used.

In the present disclosure, the negative electrode active material is not particularly limited except that it is capable of insertion and extraction of lithium ions. Examples of the negative electrode active material include natural graphite, artificial graphite, graphite, mesocarbon microbeads (MCMB), tin and/or tin alloys, tin oxides, silicon and/or silicon alloys, and silicon oxides. When the negative electrode active material is an alloy, the negative electrode active material may contain a material that forms an alloy with lithium. Examples of materials that form an alloy with lithium include one or more kinds selected from the group consisting of germanium, tin, lead, zinc, magnesium, sodium, aluminum, gallium and indium, and alloys thereof.

When these active materials are in a particulate form, the average particle size is not particularly limited, but is preferably 5 µm or more and 20 µm or less.

The conductive additive contained in the electrode is also not particularly limited, and any electron-conductive material that does not adversely affect battery characteristics can be used. Specific examples of the conductive additive include conductive carbons such as Ketjenblack and acetylene black; carbon materials such as natural graphite, artificial graphite, carbon whiskers, carbon nanotubes (CNT) and carbon fiber powder; metal powders and metal fibers such as those of Cu, Fe, Ag, Ni, Pd, Au, Pt, In and W; and conductive metal oxides such as indium oxide and tin oxide. Thus, as the conductive additive, at least one kind selected from the group consisting of the conductive carbons, the carbon materials, the metal powders, the metal fibers and the conductive metal oxides can be suitably used. Among these, from the viewpoint of imparting higher conductivity with a small amount, at least one kind selected from the group consisting of the conductive carbons and the carbon materials is more preferable, and at least one kind selected from the group consisting of Ketjenblack, carbon nanotubes and acetylene black is further preferable. In addition, from the viewpoint of providing a higher effect in terms of formation of conductive paths, it is preferable to use a combination of conductive carbon and carbon nanotubes (CNT). The compounding ratio of these conductive additives is preferably 1% to 30% by mass with respect to the active material.

A slurry for forming a lithium-ion battery positive electrode mixture layer according to one aspect of the present disclosure is a slurry for forming a lithium-ion battery positive electrode mixture layer including the above-described binder, and comprises a positive electrode active material, a conductive additive, a chelating group-containing polymer, a flexible polymer and water. The slurry may contain, as necessary, a viscosity modifier such as carboxymethyl cellulose, and a pH modifier such as an acid or an alkali. The solid content of the slurry is not particularly limited, but is preferably 20% to 80% by mass in consideration of the viscosity of the slurry, dispersibility of the solid components, load on the drying process, and the like. The ratio of the solid content in the slurry is preferably, in terms of mass ratio, positive electrode active material:conductive additive:binder = 70 to 98:1 to 30:1 to 20 (more preferably, 90 to 98:1 to 5:1 to 5). The method for producing the slurry is also not particularly limited. Examples of the method for producing the slurry include a method in which the chelating group-containing polymer, the flexible polymer, the active material and the conductive additive are collectively mixed with water, followed by dispersion and/or dissolution to prepare a slurry; a method in which the chelating group-containing polymer and the flexible polymer are first dissolved and/or dispersed in water, and the active material and the conductive additive are then added to an aqueous solution or a dispersion of the chelating group-containing polymer and the flexible polymer, followed by mixing to prepare a slurry; and a method in which the active material and the conductive additive are first mixed, and the resulting mixture is mixed with an aqueous solution or a dispersion of components constituting the binder. A mixer used for preparing the slurry is also not particularly limited; a mortar, a roll mill, a ball mill, a screw mill, a vibration mill, a homogenizer, a planetary mixer, and the like are used. In these slurry production methods, when introducing the flexible polymer into the slurry, it is preferable to use an aqueous emulsion of the flexible polymer. By preparing the slurry using an aqueous emulsion of the flexible polymer as described above, there is a tendency that an electrode having higher bendability can be prepared.

A positive electrode for a lithium-ion battery according to one aspect of the present disclosure comprises the binder. The positive electrode for a lithium-ion battery comprises an electrode mixture layer (positive electrode mixture layer) obtained by applying the above-described slurry onto a current collector and drying the slurry, and the current collector. The thickness of the electrode mixture layer (positive electrode mixture layer) composed of an active material, a binder and a conductive additive is preferably 10 to 200 µm. To form an electrode mixture layer having such a thickness on the current collector, it is preferable to set the coating weight of the electrode mixture layer (positive electrode mixture layer) to 4 to 25 mg/cm².

The current collector may be any conductor in which a surface in contact with the electrode mixture layer (positive electrode mixture layer) exhibits electrical conductivity, and examples thereof include conductors formed of metals such as copper, gold, aluminum, titanium, nickel and stainless steel, and alloys thereof; conductive metal oxides such as indium oxide and tin oxide; and conductive materials such as conductive carbon. The shape of the current collector is not particularly limited; shapes such as a foil shape, a film shape, a sheet shape, a net shape, expanded metal, punching metal and a foam shape can be adopted. The thickness of the current collector is also not particularly limited, but is preferably about 1 to 100 µm.

The method for producing the positive electrode for a lithium-ion battery is not particularly limited; the positive electrode can be produced by applying the slurry onto a current collector and drying the slurry. The slurry application method is also not particularly limited; methods such as slit coating, die coating, roll coating, dip coating, blade coating, knife coating and wire bar coating can be used. The drying method and conditions are also not particularly limited; a commonly used hot-air circulation dryer, a vacuum dryer, an infrared dryer and a microwave heating dryer can be used. When heating is performed during drying, the heating temperature is also not particularly limited; drying can be performed, for example, by heating at 50°C to 150°C. Furthermore, by pressing the electrode under pressure during or after drying, the porous structure can also be rendered uniform.

When a flexible polymer in the form of an aqueous polymer emulsion is used during preparation of the slurry, by applying the slurry onto a current collector and drying the slurry to produce a positive electrode mixture layer, the flexible polymer in the binder of the positive electrode for a lithium-ion battery can be a dried product of the aqueous emulsion. By making the flexible polymer in the binder a dried product of the aqueous emulsion, there is a tendency that it becomes possible to impart higher bendability to the positive electrode, and it becomes possible to suppress occurrence of defective products in the winding process during battery production to a higher degree.

A lithium-ion battery (lithium-ion secondary battery; LIB) according to one aspect of the present disclosure comprises the above-described positive electrode for a lithium-ion battery. By using the positive electrode for a lithium-ion battery, it becomes possible to provide a high-performance lithium-ion battery in which excellent charge-discharge characteristics and an extended cycle life are achieved. A lithium-ion battery generally comprises a positive electrode, a negative electrode, a separator, a nonaqueous electrolyte solution, and the like. The positive electrode is obtained by binding the above positive electrode active material onto a positive electrode current collector together with the above conductive additive by a binder, and has a structure in which a positive electrode mixture layer including the positive electrode active material, the binder and the conductive additive is formed on the current collector. The negative electrode also has a structure similar to that of the positive electrode, and is obtained by binding the above negative electrode active material and the above conductive additive onto a negative electrode current collector by a binder. As the separator, a porous film such as a polyolefin film is generally used. The separator is interposed between the positive electrode and the negative electrode in order to perform a shutdown function when the battery undergoes thermal runaway. The nonaqueous electrolyte solution contains an electrolyte salt such as LiPF₄ dissolved in an organic solvent such as a cyclic carbonate. The inside of the battery is filled with the nonaqueous electrolyte solution. Lithium ions move from the positive electrode to the negative electrode during charging, and from the negative electrode to the positive electrode during discharging.

The nonaqueous electrolyte solution is also not particularly limited, and known materials can be used. The nonaqueous electrolyte solution contains an electrolyte salt dissolved in an organic solvent. Examples of the electrolyte salt include CF₃SO₃Li, (CF₃SO₂)₂NLi, (CF₃SO₂)₂CLi, LiBF₄, LiB(C₆H₈)₄, LiPF₄, LiClO₄, LiAsF₆, LiCl and LiBr. Examples of the organic solvent for dissolving the electrolyte salt include ethylene carbonate, vinylene carbonate, propylene carbonate, butylene carbonate, dimethyl carbonate, diethyl carbonate, ethylmethyl carbonate, 1,2-dimethoxyethane, 1,2-diethoxyethane, γ-butyrolactone, tetrahydrofuran, 1,4-dioxane, anisole, diethyl ether, sulfolane, methylsulfolane, acetonitrile, propionitrile, butyronitrile, valeronitrile, benzonitrile, dimethylformamide, dimethyl sulfoxide, trimethyl phosphate and triethyl phosphate. The concentration of the electrolyte salt in the nonaqueous electrolyte solution can be selected preferably 0.1 to 5 mol/L, more preferably 0.5 to 3 mol/L.

The separator is also not particularly limited, and known separators can be used. Examples of the separator include a polyethylene microporous membrane, a polypropylene microporous membrane, a laminated membrane of a polyethylene microporous membrane and a polypropylene microporous membrane, and a nonwoven fabric made of polyester fibers, aramid fibers, glass fibers, or the like.

### EXAMPLES

Hereinafter, embodiments of the present disclosure will be described in further detail on the basis of Examples. However, the embodiments of the present disclosure are not limited to these Examples.

### <Production of Chelating Group-Containing Polymer>

### (Reference Example 1) Production of alginic acid into which a disodium iminodiacetate group is introduced through an ionic bond (chelating group-containing alginic acid)

1.0 g (5.7 mmol in terms of monosaccharide units) of hydrogen ion-type alginic acid (manufactured by KIMICA Corporation, trade name: Kimica Acid G) was added in small amounts to 100 ml of pure water under stirring to prepare a white, paste-like, homogeneous dispersion. Next, 1.1 g (5.7 mmol) of disodium iminodiacetate monohydrate (manufactured by FUJIFILM Wako Pure Chemical Corporation) was directly added to the alginic acid dispersion, followed by stirring. With the addition, the dispersion gradually became transparent, and after completion of the addition, became a transparent and viscous aqueous solution. This aqueous solution was stirred at room temperature for 1 hour, and then added dropwise to 4 L of acetone to form a precipitate. The precipitate was collected by filtration, further washed with acetone, and then isolated by drying under reduced pressure. The isolated yield was 1.9 g. The nitrogen content determined by elemental analysis was 3.7% by mass. The chelating group content calculated from the nitrogen content was 2.6 mmol/g. The product was readily soluble in water. To confirm that a chelating group is introduced into alginic acid, FT-IR spectra before and after the reaction were compared. In the hydrogen ion-type alginic acid before the reaction, an absorption derived from stretching vibration of the carbonyl of a carboxylic acid was confirmed at 1740 cm⁻¹, whereas after the reaction, the absorption at 1740 cm⁻¹ disappeared, and a new absorption derived from stretching vibration of the carbonyl of a carboxylic acid salt was confirmed at 1620 cm⁻¹. From this, it finds that alginic acid and iminodiacetic acid were bonded through an ionic bond. Subsequently, the molecular weight of the chelating group-containing polymer was measured by aqueous GPC. The weight-average molecular weight was 320,000.

With respect to the chelating group-containing polymer (chelating polymer), as a method of elemental analysis for determining the nitrogen content, a method was adopted in which a MICRO CORDER JM10 manufactured by J-SCIENCE LAB Co., Ltd. was used, the sample was completely combusted in an oxygen atmosphere, and CO₂, H₂O and N₂ generated were measured with a thermal conductivity detector. FT-IR spectrum measurement for the chelating group-containing polymer was performed by an ATR method using a Fourier transform infrared spectrophotometer (FT-IR) (SPECTRUM ONE, manufactured by PerkinElmer) as a measuring apparatus. Furthermore, measurement by aqueous GPC for the chelating group-containing polymer was performed under conditions in which an HLC-8320GPC manufactured by Tosoh Corporation was used as a measuring apparatus, TSKgel GMPXL was used as a column, the column temperature was set to 40°C, a 0.1 mol/L aqueous phosphate buffer solution at pH 8.0 was used as an eluent, and the flow rate was 1 mL/min. Using polyethylene glycol as a standard sample, measurement was conducted under conditions in which molecular weight conversion was performed in terms of polyethylene glycol, and the weight-average molecular weight of the chelating group-containing polymer was determined.

### (Reference Example 2) Production of alginic acid into which a tetrasodium ethylenediaminetetraacetate group is introduced through an ionic bond (chelating group-containing alginic acid)

Alginic acid into which a chelating group was introduced through an ionic bond (chelating group-containing polymer: chelating polymer) was produced in the same manner as in Reference Example 1, except that tetrasodium ethylenediaminetetraacetate tetrahydrate was used in the same molar amount instead of disodium iminodiacetate monohydrate. With respect to the chelating group-containing polymer, properties were determined in the same manner as in Reference Example 1. The chelating group content calculated from the nitrogen content was 3.8 mmol/g. The weight-average molecular weight measured using aqueous GPC was 370,000.

### (Reference Example 3) Production of alginic acid into which a tetrasodium ethylenediaminetetraacetate group is introduced through an ionic bond (chelating group-containing alginic acid)

Alginic acid into which tetrasodium ethylenediaminetetraacetate was introduced through an ionic bond (chelating group-containing polymer: chelating polymer) was produced in the same manner as in Reference Example 2, except that, instead of hydrogen ion-type alginic acid (manufactured by KIMICA Corporation, trade name: Kimica Acid G), 1 g of hydrogen ion-type alginic acid having a weight-average molecular weight of 960,000, which was prepared in-house from sodium alginate (manufactured by Qingdao Gather Great Ocean Algae Industry Group Co., Ltd.; weight-average molecular weight: 1,300,000), was used. With respect to the chelating group-containing polymer, properties were determined in the same manner as in Reference Example 1. The chelating group content calculated from the nitrogen content was 4.7 mmol/g. The weight-average molecular weight measured using aqueous GPC was 920,000.

### (Reference Example 4) Production of alginic acid into which a nitrilotris(trisodium methylphosphonate) group is introduced through an ionic bond (chelating group-containing alginic acid)

Alginic acid into which a chelating group was introduced through an ionic bond (chelating group-containing polymer: chelating polymer) was produced in the same manner as in Reference Example 3, except that nitrilotris(trisodium methylphosphonate) was used in the same molar amount instead of tetrasodium ethylenediaminetetraacetate tetrahydrate. With respect to the chelating group-containing polymer, properties were determined in the same manner as in Reference Example 1. The chelating group content calculated from the nitrogen content was 1.2 mmol/g. The weight-average molecular weight measured using aqueous GPC was 900,000.

### (Reference Example 5) Production of alginic acid into which a disodium iminodiacetate group is introduced through a covalent bond (chelating group-containing alginic acid)

0.50 g (2.5 mmol in terms of monosaccharide units) of sodium alginate (manufactured by Qingdao Gather Great Ocean Algae Industry Group Co., Ltd.; weight-average molecular weight: 1,300,000) was added in small amounts to 50 ml of pure water under stirring to prepare a viscous and homogeneous aqueous solution. 0.10 g (2.5 mmol) of sodium hydroxide (manufactured by Tokyo Chemical Industry Co., Ltd.) was added to the aqueous solution and dissolved, and 3.10 g (50 mmol) of epichlorohydrin (manufactured by Tokyo Chemical Industry Co., Ltd.) was further added, followed by reaction at 20°C for 6 hours. The aqueous solution after the reaction was added dropwise to 2 L of ethanol to form a precipitate, and the precipitate was collected by filtration. The collected material was further washed with ethanol and dried under reduced pressure to isolate a reaction intermediate. The isolated yield was 0.43 g, and the reaction intermediate was readily soluble in water. Note that, it is apparent that such a reaction intermediate is formed by a reaction between sodium alginate and epichlorohydrin, and an epoxy group is introduced into the reaction product.

0.30 g of the reaction intermediate was weighed and dissolved in 100 ml of pure water to prepare an aqueous solution. To the aqueous solution, 8.4 g (43 mmol) of disodium iminodiacetate monohydrate (manufactured by FUJIFILM Wako Pure Chemical Corporation) was added and dissolved, followed by reaction at 80°C for 2 hours. The aqueous solution after the reaction was purified using an ultrafiltration membrane (manufactured by Nihon Pall Ltd.; molecular weight cut-off: 1000) to remove an excess amount of iminodiacetic acid from the aqueous solution. The purified aqueous solution was added dropwise into acetone to precipitate a polymer. The precipitate was collected by filtration and dried under reduced pressure to isolate a reaction product (chelating group-containing polymer: chelating polymer). With respect to the chelating group-containing polymer, the isolated yield was 0.33 g, and the compound was soluble in water. With respect to the chelating group-containing polymer, the properties were determined in the same manner as in Reference Example 1. The weight-average molecular weight measured using aqueous GPC was 420,000. The iminodiacetate group content calculated from the nitrogen content was 1.8 mmol/g.

### <Evaluation of Heavy-Metal Ion Capture Ability>

### (Reference Example 6)

To evaluate the heavy-metal ion capture ability of the chelating group-containing polymer (chelating polymer) obtained in Reference Example 1, the following measurement was performed. 0.1 g of the chelating polymer was dissolved in 20 ml of pure water, and 1.9 g of lithium manganese oxide (LiMn₂O₄: prepared in-house; average particle size: 10 µm; hereinafter abbreviated as LMO) was added to prepare a slurry. The slurry was concentrated using an evaporator, and then dried under reduced pressure at 80°C to remove water, thereby obtaining a mixture of the chelating polymer and LMO. 1.0 g was sampled from the mixture, charged into a Teflon (registered trademark) container, and dried under reduced pressure at 120°C for 4 hours, followed by sealing. The sealed Teflon (registered trademark) container was opened in a glove box, and 15 ml of an electrolyte solution (manufactured by Kishida Chemical Co., Ltd.; a solution in which LiPF₆ was dissolved at a concentration of 1 mol/L in a mixed solvent of ethylene carbonate and dimethyl carbonate at a ratio of 1:2) was added. Then, the container was sealed again and heated at 85°C for 4 hours. After completion of heating, the Teflon (registered trademark) container was opened in the glove box, filtration was then performed using a syringe filter, and the filtrate was collected. The filtrate was subjected to acid digestion, and manganese ions were quantified by ICP-MS. The concentration of manganese ions was less than 1 ppm by mass. This confirmed that manganese ions eluted from LMO by heating were captured by the chelating polymer.

### (Reference Example 7)

A slurry was prepared by adding 0.05 g of the chelating polymer obtained in Reference Example 1, 0.05 g, as solid content, of a 48 mass% styrene-butadiene copolymer emulsion (aqueous emulsion; solvent: water; weight-average molecular weight of the styrene-butadiene copolymer (SBR) in the emulsion: 120,000; hereinafter such an emulsion is referred to as an "SBR emulsion"), and 1.9 g of LMO to 20 ml of pure water. Except that the slurry was concentrated using an evaporator, and then dried under reduced pressure at 80°C to remove water, thereby obtaining a mixture of the chelating polymer, SBR and LMO, the procedure was the same as in Reference Example 6, and the manganese ion concentration was measured. The manganese ion concentration was less than 1 ppm by mass. This confirmed that, even when used in combination with the SBR emulsion, manganese ions eluted from LMO by heating were captured by the chelating polymer.

### (Reference Example 8)

Except that the SBR emulsion was changed to a 30 mass% polyvinylidene fluoride emulsion (aqueous emulsion; solvent: water; weight-average molecular weight of the polyvinylidene fluoride emulsion (PVDF) in the emulsion: 1,000,000; hereinafter such an emulsion is referred to as a "PVDF emulsion"), the procedure was the same as in Reference Example 7, and the manganese ion concentration was measured. The manganese ion concentration was less than 1 ppm by mass. This confirmed that, even when used in combination with the PVDF emulsion, manganese ions eluted from LMO by heating were captured by the chelating polymer.

Note that, the LMO, the SBR emulsion and the PVDF emulsion used in the Reference Examples, Examples, and the like described below are the same as the LMO used in Reference Example 6, the SBR emulsion used in Reference Example 7 and the PVDF emulsion used in Reference Example 8, respectively.

### (Reference Example 9)

Except that the alginic acid produced in Reference Example 2, into which a tetrasodium ethylenediaminetetraacetate group had been introduced by an ionic bond, was used instead of the chelating group-containing polymer (chelating polymer) obtained in Reference Example 1, the procedure was the same as in Reference Example 6, and the manganese ion concentration was measured. The manganese ion concentration was less than 1 ppm by mass.

### (Reference Example 10)

Except that the alginic acid produced in Reference Example 2, into which a tetrasodium ethylenediaminetetraacetate group had been introduced by an ionic bond, was used instead of the chelating group-containing polymer (chelating polymer) obtained in Reference Example 1, the procedure was the same as in Reference Example 7, and the manganese ion concentration was measured. The manganese ion concentration was less than 1 ppm by mass. This confirmed that, even when used in combination with the SBR emulsion, manganese ions eluted from LMO by heating were captured by the chelating polymer obtained in Reference Example 2.

### (Reference Example 11)

Except that the alginic acid produced in Reference Example 2, into which a tetrasodium ethylenediaminetetraacetate group had been introduced by an ionic bond, was used instead of the chelating group-containing polymer (chelating polymer) obtained in Reference Example 1, the procedure was the same as in Reference Example 8, and the manganese ion concentration was measured. The manganese ion concentration was less than 1 ppm by mass. This confirmed that, even when used in combination with the PVDF emulsion, manganese ions eluted from LMO by heating were captured by the chelating polymer obtained in Reference Example 2.

### (Reference Example 12)

Except that the alginic acid produced in Reference Example 3, into which a tetrasodium ethylenediaminetetraacetate group had been introduced by an ionic bond, was used instead of the chelating group-containing polymer (chelating polymer) obtained in Reference Example 1, the procedure was the same as in Reference Example 6, and the manganese ion concentration was measured. The manganese ion concentration was less than 1 ppm by mass.

### (Reference Example 13)

Except that the alginic acid produced in Reference Example 3, into which a tetrasodium ethylenediaminetetraacetate group had been introduced by an ionic bond, was used instead of the chelating group-containing polymer (chelating polymer) obtained in Reference Example 1, the procedure was the same as in Reference Example 7, and the manganese ion concentration was measured. The manganese ion concentration was less than 1 ppm by mass. This confirmed that, even when used in combination with the SBR emulsion, manganese ions eluted from LMO by heating were captured by the chelating polymer obtained in Reference Example 3.

### (Reference Example 14)

Except that the alginic acid produced in Reference Example 3, into which a tetrasodium ethylenediaminetetraacetate group had been introduced by an ionic bond, was used instead of the chelating group-containing polymer (chelating polymer) obtained in Reference Example 1, the procedure was the same as in Reference Example 8, and the manganese ion concentration was measured. The manganese ion concentration was less than 1 ppm. This confirmed that, even when used in combination with the PVDF emulsion, manganese ions eluted from LMO by heating were captured by the chelating polymer obtained in Reference Example 3.

### (Reference Example 15)

Except that the alginic acid produced in Reference Example 4, into which a nitrilotris(trisodium methylphosphonate) group had been introduced by an ionic bond, was used instead of the chelating group-containing polymer (chelating polymer) obtained in Reference Example 1, the procedure was the same as in Reference Example 6, and the manganese ion concentration was measured. The manganese ion concentration was less than 1 ppm by mass.

### (Reference Example 16)

Except that the alginic acid produced in Reference Example 4, into which a nitrilotris(trisodium methylphosphonate) group had been introduced by an ionic bond, was used instead of the chelating group-containing polymer (chelating polymer) obtained in Reference Example 1, the procedure was the same as in Reference Example 7, and the manganese ion concentration was measured. The manganese ion concentration was less than 1 ppm by mass. This confirmed that, even when used in combination with the SBR emulsion, manganese ions eluted from LMO by heating were captured by the chelating polymer obtained in Reference Example 4.

### (Reference Example 17)

Except that the alginic acid produced in Reference Example 4, into which a nitrilotris(trisodium methylphosphonate) group had been introduced by an ionic bond, was used instead of the chelating group-containing polymer (chelating polymer) obtained in Reference Example 1, the procedure was the same as in Reference Example 8, and the manganese ion concentration was measured. The manganese ion concentration was less than 1 ppm by mass. This confirmed that, even when used in combination with the PVDF emulsion, manganese ions eluted from LMO by heating were captured by the chelating polymer obtained in Reference Example 4.

### (Reference Example 18)

Except that the alginic acid produced in Reference Example 5, into which a disodium iminodiacetate group had been introduced by a covalent bond, was used instead of the chelating group-containing polymer(chelating polymer) obtained in Reference Example 1, the procedure was the same as in Reference Example 6, and the manganese ion concentration was measured. The manganese ion concentration was less than 1 ppm by mass.

### (Reference Example 19)

Except that the alginic acid produced in Reference Example 5, into which a disodium iminodiacetate group had been introduced by a covalent bond, was used instead of the chelating group-containing polymer (chelating polymer) obtained in Reference Example 1, the procedure was the same as in Reference Example 7, and the manganese ion concentration was measured. The manganese ion concentration was less than 1 ppm by mass. This confirmed that, even when used in combination with the SBR emulsion, manganese ions eluted from LMO by heating were captured by the chelating polymer obtained in Reference Example 5.

### (Reference Example 20)

Except that the alginic acid produced in Reference Example 5, into which a disodium iminodiacetate group had been introduced by a covalent bond, was used instead of the chelating group-containing polymer (chelating polymer) obtained in Reference Example 1, the procedure was the same as in Reference Example 8, and the manganese ion concentration was measured. The manganese ion concentration was less than 1 ppm by mass. This confirmed that, even when used in combination with the PVDF emulsion, manganese ions eluted from LMO by heating were captured by the chelating polymer obtained in Reference Example 5.

### (Reference Example 21)

First, an aqueous sodium polyacrylate solution containing sodium polyacrylate having a weight-average molecular weight of 510,000 at a concentration of 13% by mass was prepared. Except that the aqueous sodium polyacrylate solution was used instead of the PVDF emulsion, the procedure was the same as in Reference Example 14, and the manganese ion concentration was measured. The manganese ion concentration was less than 1 ppm. This confirmed that, even when used in combination with sodium polyacrylate, manganese ions eluted from LMO by heating were captured by the chelating polymer obtained in Reference Example 3.

### <Production of Positive Electrode>

### (Example 1)

A positive electrode slurry was prepared from the following materials, and a positive electrode was prepared. Positive electrode active material: LMO94 parts by mass Conductive additive: acetylene black (AB)

| | |
|---|---|
| (Li-400 manufactured by Denka Company Limited) | 2.5 parts by mass |
| Binder: chelating group-containing alginic acid (Reference Example 1) | 3 parts by mass |
| SBR | 0.5 parts by mass |

94 parts by mass of LMO, 3 parts by mass of chelating group-containing alginic acid produced in Reference Example 1, and 2.5 parts by mass of AB were added, and the resulting mixture was stirred with a planetary mixer while adding water. When the stirred mixture became slurry-like, 0.5 parts by mass of an SBR emulsion was added in terms of SBR solid content (as an amount converted to solid content), followed by stirring again with a planetary mixer to prepare a positive electrode slurry. This slurry was applied onto an aluminum foil having a thickness of 12 µm using a film applicator, dried at 80°C for 24 hours under nitrogen at normal pressure, and further dried under reduced pressure at 120°C for 4 hours to prepare a positive electrode. Then, the positive electrode was compressed using a roll press machine. Thus, a positive electrode in which a positive electrode mixture layer was formed on the aluminum foil was obtained. The coating weight was 17.3 mg/cm².

### (Example 2)

A positive electrode was prepared in the same manner as in Example 1, except that the SBR emulsion was replaced by a PVDF emulsion. Thus, a positive electrode was prepared in the same manner as in Example 1, except that a PVDF emulsion was used instead of the SBR emulsion. The coating weight was 16.4 mg/cm².

### (Example 3)

A positive electrode was prepared in the same manner as in Example 2, except that the electrode was thickly coated so that the coating weight was 28.2 mg/cm². That is, a positive electrode was prepared in the same manner as in Example 2, except that the slurry was thickly applied so that the coating weight of the electrode mixture layer was 28.2 mg/cm².

### (Example 4)

A positive electrode was prepared in the same manner as in Example 1, except that the amount of SBR solid content was changed to 1 part by mass and the amount of AB was changed to 2 parts by mass. That is, a positive electrode was prepared in the same manner as in Example 1, except that the amount of the SBR emulsion used in terms of SBR solid content was changed to 1 part by mass and the amount of AB used was changed to 2 parts by mass. The coating weight was 19.7 mg/cm².

### (Example 5)

A positive electrode was prepared in the same manner as in Example 4, except that the SBR emulsion was replaced by a PVDF emulsion. Thus, a positive electrode was prepared in the same manner as in Example 1, except that a PVDF emulsion was used instead of the SBR emulsion. The coating weight was 19.2 mg/cm².

### (Example 6)

A positive electrode slurry having the following composition was prepared from the following materials, and a positive electrode was prepared.

Positive electrode active material: LMO95 parts by mass Conductive additive: acetylene black (AB)

| | |
|---|---|
| (Li-400 manufactured by Denka Company Limited) | |
| | 1 part by mass |
| Carbon nanotubes (CNT) | 1 part by mass |
| Binder: chelating group-containing alginic acid (Reference Example 1) | 2 parts by mass |
| SBR | 1 part by mass |

95 parts by mass of LMO, 2 parts by mass of chelating group-containing alginic acid produced in Reference Example 1, 1 part by mass of AB, and 1 part by mass of CNT were added to a planetary mixer, and the resulting mixture was stirred with the planetary mixer while adding water. When the stirred mixture became slurry-like as a result of such stirring, 1 part by mass of an SBR emulsion was added to the stirred mixture in terms of SBR solid content, followed by stirring again with a planetary mixer to prepare a positive electrode slurry. The positive electrode slurry was applied onto an aluminum foil having a thickness of 12 µm using a film applicator. The resulting coating film was dried at 80°C for 24 hours under a nitrogen atmosphere at normal pressure, and further dried under reduced pressure at 120°C for 4 hours. The resulting laminate of the aluminum foil and the dried coating film was compressed using a roll press machine to obtain a positive electrode. Thus, a positive electrode in which a positive electrode mixture layer was formed on the aluminum foil was prepared. The coating weight of the positive electrode mixture layer was 20.1 mg/cm².

### (Example 7)

A positive electrode was prepared in the same manner as in Example 4, except that the type of emulsion was changed from an SBR emulsion to a PVDF emulsion. The coating weight of the positive electrode mixture layer was 20.7 mg/cm².

### (Comparative Example 1)

A positive electrode was prepared in the same manner as in Example 1 using 94 parts by mass of LMO, 3 parts by mass of AB, and 3 parts by mass of chelate-containing alginic acid (Reference Example 1). That is, a positive electrode was prepared in the same manner as in Example 1, except that an SBR emulsion was not used and the amounts of LMO, AB and chelate-containing alginic acid (Reference Example 1) used were changed to 94 parts by mass of LMO, 3 parts by mass of AB, and 3 parts by mass of chelate-containing alginic acid (Reference Example 1). The coating weight of the positive electrode mixture layer was 16.8 mg/cm².

### [Methods for Evaluating Properties of Positive Electrode]

The methods for evaluating properties of the positive electrodes obtained in Examples and the like are described below.

### <Inspection of Appearance of Positive Electrode>

The appearance (electrode appearance) of the positive electrode prepared in each Example and the like was visually inspected to determine the presence or absence of cracks on the surface of the positive electrode after production. Table 1 shows the results. With respect to the results of such visual inspection, in the table, a case in which no cracks were observed in the appearance is indicated as "A", and a case in which cracks were observed in the appearance is indicated as "B".

### <Determination of Crack Occurrence Due to Curling of Positive Electrode>

The positive electrodes of Examples 1 to 7 and Comparative Example 1 were each wound around metal rods having diameters of 10 mm, 8 mm, 6 mm, 4 mm and 2 mm, and whether occurrence of cracks was observed was determined. Table 1 shows the results (results of the winding test). With respect to the results of such measurement, in the table, a case in which no occurrence of cracks was observed is indicated as "A", and a case in which occurrence of cracks was observed is indicated as "B".

### <Measurement of Peel Strength>

One surface of a double-sided adhesive tape having a width of 20 mm (manufactured by NICHIBAN Co., Ltd., trade name: NICETACK) was bonded to a polycarbonate substrate having a thickness of 1.5 mm, and the other surface of the double-sided adhesive tape was bonded to a non-adhesive surface of an adherend tape (single-sided tape; manufactured by Nitto Denko Corporation; polyester adhesive tape No. 31B) (provided that a region having a length of 1 cm from an end portion of the adherend tape was kept in a lifted state). Then, the positive electrode prepared in each Example and the like was cut into a width of 15 mm and a length of 8 cm, and was bonded so that the positive electrode mixture layer side of the positive electrode adhered to the adhesive surface of the adherend tape. At this time, the positive electrode was bonded to the adherend tape while ensuring that the electrode did not adhere to the region having a length of 1 cm from the end portion of the adherend tape, and the region was kept in a lifted state. Subsequently, a PET film was attached to the portion having a length of 1 cm from the end portion to which the positive electrode was not bonded, and used as a gripping portion. Thus, a test specimen in which the positive electrode mixture layer portion was firmly bonded to the adherend tape was prepared.

The test specimen was fixed to a tensile tester (manufactured by A&D Company, Limited, TENSILON RTG-1210), and 180° peeling was performed by pulling the gripping portion of the test specimen at a peel speed of 100 mm/min. Tensile strengths at points at which the test specimen had been pulled by 10 mm, 20 mm, 30 mm and 40 mm from the start of peeling were each determined, and the average thereof was calculated as peel strength. Table 1 shows the results. It can be said that, when the peel strength measured in this manner is 5 mN/mm or more, it has excellent adhesion.

### <Measurement of Electrode Through-Plane Resistance>

Except that the method of application of the positive electrode slurry was changed so that coated portions and uncoated portions each having an area of 1 cm square were present continuously, two electrodes for measurement samples of each of Examples 6 and 7 were prepared in the same manner as the method employed in the respective Examples. Then, the coated portions of the two electrode films were overlapped with each other. In a state in which a load was applied to the overlapped portion, resistance was measured with a tester being applied to the uncoated portions of the electrodes. The resistance thus measured was determined as the electrode through-plane resistance of the positive electrodes obtained in Examples 6 and 7. Table 1 shows the results. It can be said that, when the electrode through-plane resistance measured in this manner is, for example, about 40 Ω or less, the positive electrode is sufficiently usable for a lithium battery. In addition, it can be evaluated that the lower the value of the electrode through-plane resistance, the more excellent the input-output characteristics of the positive electrode. From such a viewpoint, it can be evaluated that, when the electrode through-plane resistance is 10 Ω or less, the positive electrode has a higher level of input-output characteristics and is particularly suitably usable for a lithium battery, and that, when the electrode through-plane resistance is 3 Ω or less, the positive electrode exhibits further excellent characteristics in terms of input-output characteristics.

**[Table 1]**

| | Active material | Binder | | | Conductive additive | | Coating weight | Thickness^{*2} | Peel strength | Electrode through-plane resistance | Electrode appearance^{*3} (Visual inspection) | Winding test^{*4} | | | | |
|---|---|---|---|---|---|---|---|---|---|---|---|---|---|---|---|---|
| | LMO | Reference Example 1 Polymer^{*1} | SBR (Solid component) | PVDF (Solid component) | AB | CNT | | | | | | Metal rod diameter | | | | |
| | mass part | mass part | mass part | mass part | mass part | mass part | mg/cm² | µm | mN/mm | Ω | - | 10 mm | 8 mm | 6 mm | 4 mm | 2 mm |
| Example 1 | 94 | 3 | 0.5 | 0 | 2.5 | 0 | 17.3 | 76 | 7 | - | A | A | A | A | A | A |
| Example 2 | 94 | 3 | 0 | 0.5 | 2.5 | 0 | 16.4 | 69 | 7 | - | A | A | A | A | A | A |
| Example 3 | 94 | 3 | 0 | 0.5 | 2.5 | 0 | 28.2 | 107 | 6 | - | A | A | A | A | A | A |
| Example 4 | 94 | 3 | 1 | 0 | 2 | 0 | 19.7 | 80 | 9 | - | A | A | A | A | A | A |
| Example 5 | 94 | 3 | 0 | 1 | 2 | 0 | 19.2 | 79 | 8 | - | A | A | A | A | A | A |
| Example 6 | 95 | 2 | 1 | 0 | 1 | 1 | 20.1 | 77 | 8 | 11 | A | A | A | A | A | A |
| Example 7 | 95 | 2 | 0 | 1 | 1 | 1 | 20.7 | 79 | 7 | 9 | A | A | A | A | A | A |
| Comparative Example 1 | 94 | 3 | 0 | 0 | 3 | 0 | 16.8 | 74 | 2 | - | A | A | A | B | B | B |

| | | | | | | | | | | | | | | | | |
|---|---|---|---|---|---|---|---|---|---|---|---|---|---|---|---|---|
| *1: Chelating group-containing alginic acid (chelating polymer) produced in Reference Example 1 *2: Thickness of positive electrode mixture layer *3: Evaluation criteria for appearance observation: A: No cracks, B: Cracks present *4: Evaluation criteria for winding test: A: No crack occurrence, B: Crack occurrence | | | | | | | | | | | | | | | | |

As shown in Table 1, in the test of the determination of crack occurrence due to curling of the positive electrode (winding test), in the positive electrodes of Examples 1 to 7, no crack occurrence was confirmed even when each electrode was wound around a metal rod having a diameter of 2 mm. In the positive electrode of Comparative Example 1, crack occurrence was visually confirmed when the electrode was wound around a metal rod having a diameter of 6 mm or less. From these results, it can be understood that, by using the chelating group-containing polymer in combination with an emulsion (aqueous emulsion) containing a flexible polymer, adhesion of the positive electrode mixture layer to the current collector was improved, and even when the positive electrode mixture layer was formed to have a large thickness, peeling of the positive electrode mixture layer was suppressed, thereby suppressing crack occurrence. It can be also understood that, since flexibility is imparted to the positive electrode, it could suppress crack occurrence during winding.

From the results shown in Table 1, it can be understood that, in the electrodes (positive electrodes) produced in Examples 1 to 7, the electrode mixture layer was excellent in terms of flexibility (bendability) and adhesion, and cracks were unlikely to occur during winding. In addition, since it is clear from these results that electrodes can be efficiently produced by adopting a winding process during production, it can also be understood that excellent workability during preparation of the positive electrode can be achieved by the slurry used during electrode preparation. In the results of evaluation of the heavy-metal ion capture ability of the chelating polymers shown in Reference Examples 6 to 8, in systems containing the chelating group-containing alginic acid produced in Reference Example 1, the measured manganese ion concentrations were all less than 1 ppm by mass. Accordingly, it is clear that, in positive electrodes including the chelating group-containing alginic acid produced in Reference Example 1, precipitation and deposition of manganese from the positive electrode active material onto the negative electrode active material can be suppressed. From these results, it is evident that, by using the electrodes prepared in the Examples, excellent charge-discharge characteristics can be imparted to batteries using the electrodes, and the cycle life of the batteries can be extended.

In the Examples and the like described below, various evaluation methods described in the above section [Methods for Evaluating Properties of Positive Electrode] were employed to evaluate properties of the positive electrodes, and the evaluation results are described in the Examples and tables.

### (Example 8)

A positive electrode was prepared in the same manner as in Example 6, except that, instead of using 2 parts by mass of the chelating group-containing alginic acid produced in Reference Example 1, 2.5 parts by mass of the chelating group-containing alginic acid produced in Reference Example 2 was used, and the amount of AB used was changed from 1 part by mass to 0.5 parts by mass. The coating weight of the positive electrode mixture layer was 26.6 mg/cm². The thickness of the positive electrode mixture layer was 110 µm, the peel strength was 13 mN/mm, and the electrode through-plane resistance was 16 Ω. In the visual inspection, no cracks were observed in the electrode appearance, and no cracks occurred in the winding test.

### (Example 9)

A positive electrode was prepared in the same manner as in Example 8, except that the type of emulsion was changed from an SBR emulsion to a PVDF emulsion. The coating weight of the positive electrode mixture layer was 25.3 mg/cm². The thickness of the positive electrode mixture layer was 114 µm, the peel strength was 7 mN/mm, and the electrode through-plane resistance was 9 Q. In the visual inspection, no cracks were observed in the electrode appearance, and no cracks occurred in the winding test.

**[Table 2]**

| | Active material | Binder | | | Conductive additive | | Coating weight | Thickness^{*2} | Peel strength | Electrode through-plane resistance | Electrode appearance^{*3} (Visual inspection) | Winding test^{*4} | | | | |
|---|---|---|---|---|---|---|---|---|---|---|---|---|---|---|---|---|
| | LMO | Reference Example 2 Polymer^{*1} | SBR (solid component) | PVDF (solid component) | AB | CNT | | | | | | Metal rod diameter | | | | |
| | mass part | mass part | mass part | mass part | mass part | mass part | mg/cm² | µm | mN/mm | Ω | - | 10 mm | 8 mm | 6 mm | 4 mm | 2 mm |
| Example 8 | 95 | 2.5 | 1 | 0 | 0.5 | 1 | 26.6 | 110 | 13 | 16 | A | A | A | A | A | A |
| Example 9 | 95 | 2.5 | 0 | 1 | 0.5 | 1 | 25.3 | 114 | 7 | 9 | A | A | A | A | A | A |

| | | | | | | | | | | | | | | | | |
|---|---|---|---|---|---|---|---|---|---|---|---|---|---|---|---|---|
| *1: Chelating group-containing alginic acid (chelating polymer) produced in Reference Example 2 *2: Thickness of positive electrode mixture layer *3: Evaluation criteria for appearance observation: A: No cracks, B: Cracks present *4: Evaluation criteria for winding test: A: No crack occurrence, B: Crack occurrence | | | | | | | | | | | | | | | | |

### (Example 10)

A positive electrode slurry having the following composition was prepared from the following materials, and a positive electrode was prepared.
Positive electrode active material: LMO95 parts by mass
Conductive additive: acetylene black (AB)

| | |
|---|---|
| (Li-400 manufactured by Denka Company Limited) | 0.5 part by mass |
| Carbon nanotubes (CNT) | 1 part by mass |
| Binder: chelating group-containing alginic acid(Reference Example 3) | 2.5 parts by mass |
| SBR | 1 part by mass |

95 parts by mass of LMO, 2.5 parts by mass of chelating group-containing alginic acid produced in Reference Example 3, 0.5 parts by mass of AB, and 1 part by mass of CNT were added to a planetary mixer, and the resulting mixture was stirred with the planetary mixer while adding water. As a result of such stirring, when the stirred mixture became slurry-like, 1 part by mass of an SBR emulsion was added to the stirred mixture in terms of SBR solid content, followed by stirring again with a planetary mixer to prepare a positive electrode slurry. The slurry was applied onto an aluminum foil having a thickness of 12 µm using a film applicator. The resulting coating film was dried at 80°C for 24 hours under a nitrogen atmosphere at normal pressure, and further dried under reduced pressure at 120°C for 4 hours. Then, the resulting laminate of the aluminum foil and the dried coating film was compressed using a roll press machine to obtain a positive electrode. Thus, a positive electrode in which a positive electrode mixture layer was formed on the aluminum foil was prepared. The coating weight of the positive electrode mixture layer was 28.9 mg/cm². The thickness of the positive electrode mixture layer was 110 µm, the peel strength was 17 mN/mm, and the electrode through-plane resistance was 19.5 Q. In the visual inspection, no cracks were observed in the electrode appearance, and no cracks occurred in the winding test.

### (Example 11)

A positive electrode was prepared in the same manner as in Example 10, except that the amount of the chelating group-containing alginic acid produced in Reference Example 3 was changed to 2 parts by mass, the amount of SBR used in terms of solid content was changed to 0.5 parts by mass, and the amount of CNT used was changed to 2 parts by mass. The coating weight of the positive electrode mixture layer was 32.3 mg/cm². The thickness of the positive electrode mixture layer was 135 µm, the peel strength was 6 mN/mm, and the electrode through-plane resistance was 2.5 Q. In the visual inspection, no cracks were observed in the electrode appearance, and no cracks occurred in the winding test.

### (Example 12)

A positive electrode was prepared in the same manner as in Example 10, except that the amount of the chelating group-containing alginic acid produced in Reference Example 3 was changed to 1.5 parts by mass, the amount of AB used was changed to 1 part by mass, and the amount of CNT used was changed to 1.5 parts by mass. The coating weight of the positive electrode mixture layer was 27.7 mg/cm². The thickness of the positive electrode mixture layer was 128 µm, the peel strength was 12 mN/mm, and the electrode through-plane resistance was 3.5 Ω. In the visual inspection, no cracks were observed in the electrode appearance, and no cracks occurred in the winding test.

### (Example 13)

A positive electrode was prepared in the same manner as in Example 10, except that the amount of the chelating group-containing alginic acid produced in Reference Example 3 was changed to 1 part by mass, the amount of AB used was changed to 1.5 parts by mass, and the amount of CNT used was changed to 1.5 parts by mass. The coating weight of the positive electrode mixture layer was 28.3 mg/cm². The thickness of the positive electrode mixture layer was 114 µm, the peel strength was 7 mN/mm, and the electrode through-plane resistance was 1.5 Q. In the visual inspection, no cracks were observed in the electrode appearance, and no cracks occurred in the winding test.

### (Example 14)

A positive electrode was prepared in the same manner as in Example 10, except that the type of emulsion was changed from an SBR emulsion to a PVDF emulsion. The coating weight of the positive electrode mixture layer was 27.7 mg/cm². The thickness of the positive electrode mixture layer was 120 µm, the peel strength was 10 mN/mm, and the electrode through-plane resistance was 35 Ω. In the visual inspection, no cracks were observed in the electrode appearance, and no cracks occurred in the winding test.

### (Example 15)

A positive electrode was prepared in the same manner as in Example 14, except that the amount of PVDF used in terms of solid content was changed to 0.5 parts by mass, and the amount of CNT used was changed to 1.5 parts by mass. The coating weight of the positive electrode mixture layer was 30.8 mg/cm². The thickness of the positive electrode mixture layer was 137 µm, the peel strength was 6 mN/mm, and the electrode through-plane resistance was 5.5 Ω. In the visual inspection, no cracks were observed in the electrode appearance, and no cracks occurred in the winding test.

**[Table 3]**

| | Active material | Binder | | | Conductive additive | | Coating weight | Thickness^{*2} | Peel strength | Electrode through-plane resistance | Electrode appearance^{*3} (Visual inspection) | Winding test^{*4} | | | | |
|---|---|---|---|---|---|---|---|---|---|---|---|---|---|---|---|---|
| | LMO | Reference Example 3 Polymer^{*1} | SBR (solid component) | PVDF (solid component) | AB | CNT | | | | | | Metal rod diameter | | | | |
| | mass part | mass part | mass part | mass part | mass part | mass part | mg/cm² | µm | mN/mm | Ω | - | 10 mm | 8 mm | 6 mm | 4 mm | 2 mm |
| Example 10 | 95 | 2.5 | 1 | 0 | 0.5 | 1 | 28.9 | 110 | 17 | 19.5 | A | A | A | A | A | A |
| Example 11 | 95 | 2 | 0.5 | 0 | 0.5 | 2 | 32.3 | 135 | 6 | 2.5 | A | A | A | A | A | A |
| Example 12 | 95 | 1.5 | 1 | 0 | 1 | 1.5 | 27.7 | 128 | 12 | 3.5 | A | A | A | A | A | A |
| Example 13 | 95 | 1 | 1 | 0 | 1.5 | 1.5 | 28.3 | 114 | 7 | 1.5 | A | A | A | A | A | A |
| Example 14 | 95 | 2.5 | 0 | 1 | 0.5 | 1 | 27.7 | 120 | 10 | 35 | A | A | A | A | A | A |
| Example 15 | 95 | 2.5 | 0 | 0.5 | 0.5 | 1.5 | 30.8 | 137 | 6 | 5.5 | A | A | A | A | A | A |

| | | | | | | | | | | | | | | | | |
|---|---|---|---|---|---|---|---|---|---|---|---|---|---|---|---|---|
| *1: Chelating group-containing alginic acid (chelating polymer) produced in Reference Example 3 *2: Thickness of positive electrode mixture layer *3: Evaluation criteria for appearance observation: A: No cracks, B: Cracks present *4: Evaluation criteria for winding test: A: No crack occurrence, B: Crack occurrence | | | | | | | | | | | | | | | | |

### (Example 16)

A positive electrode was prepared in the same manner as in Example 10, except that, instead of the chelating group-containing alginic acid produced in Reference Example 3, the chelating group-containing alginic acid produced in Reference Example 4 was used. The coating weight of the positive electrode mixture layer was 29.0 mg/cm². The thickness of the positive electrode mixture layer was 110 µm, the peel strength was 15 mN/mm, and the electrode through-plane resistance was 11.1 Ω. In the visual inspection, no cracks were observed in the electrode appearance, and no cracks occurred in the winding test.

### (Example 17)

A positive electrode was prepared in the same manner as in Example 16, except that the type of emulsion was changed from an SBR emulsion to a PVDF emulsion. The coating weight of the positive electrode mixture layer was 26.2 mg/cm². The thickness of the positive electrode mixture layer was 114 µm, the peel strength was 9 mN/mm, and the electrode through-plane resistance was 7.8 Ω. In the visual inspection, no cracks were observed in the electrode appearance, and no cracks occurred in the winding test.

**[Table 4]**

| | Active material | Binder | | | Conductive additive | | Coating weight | Thickness^{*2} | Peel strength | Electrode through-plane resistance | Electrode appearance^{*3} (Visual inspection) | Winding test^{*4} | | | | |
|---|---|---|---|---|---|---|---|---|---|---|---|---|---|---|---|---|
| | LMO | Reference Example 4 Polymer^{*1} | SBR (solid component) | PVDF (solid component) | AB | CNT | | | | | | Metal rod diameter | | | | |
| | mass part | mass part | mass part | mass part | mass part | mass part | mg/cm² | µm | mN/mm | Ω | - | 10 mm | 8 mm | 6 mm | 4 mm | 2 mm |
| Example 16 | 95 | 2.5 | 1 | 0 | 0.5 | 1 | 29.0 | 110 | 15 | 11.1 | A | A | A | A | A | A |
| Example 17 | 95 | 2.5 | 0 | 1 | 0.5 | 1 | 26.2 | 114 | 9 | 7.8 | A | A | A | A | A | A |

| | | | | | | | | | | | | | | | | |
|---|---|---|---|---|---|---|---|---|---|---|---|---|---|---|---|---|
| *1: Chelating group-containing alginic acid (chelating polymer) produced in Reference Example 4 *2: Thickness of positive electrode mixture layer *3: Evaluation criteria for appearance observation: A: No cracks, B: Cracks present *4: Evaluation criteria for winding test: A: No crack occurrence, B: Crack occurrence | | | | | | | | | | | | | | | | |

### (Example 18)

A positive electrode was prepared in the same manner as in Example 10, except that, instead of the chelating group-containing alginic acid produced in Reference Example 3, the chelating group-containing alginic acid produced in Reference Example 5 was used. The coating weight of the positive electrode mixture layer was 28.8 mg/cm². The thickness of the positive electrode mixture layer was 122 µm, the peel strength was 16 mN/mm, and the electrode through-plane resistance was 17 Ω. In the visual inspection, no cracks were observed in the electrode appearance, and no cracks occurred in the winding test.

### (Example 19)

A positive electrode was prepared in the same manner as in Example 18, except that the type of emulsion was changed from an SBR emulsion to a PVDF emulsion. The coating weight of the positive electrode mixture layer was 28.4 mg/cm². The thickness of the positive electrode mixture layer was 108 µm, the peel strength was 12 mN/mm, and the electrode through-plane resistance was 8.6 Ω. In the visual inspection, no cracks were observed in the electrode appearance, and no cracks occurred in the winding test.

### (Comparative Example 2)

A positive electrode was prepared in the same manner as in Example 18, except that the amount of the chelating group-containing alginic acid produced in Reference Example 5 was changed to 3 parts by mass, the SBR emulsion was not used, and the amount of AB used was changed to 1 part by mass. The coating weight of the positive electrode mixture layer was 29.2 mg/cm². The thickness of the positive electrode mixture layer was 130 µm, the peel strength was 2 mN/mm, and the electrode through-plane resistance was 7 Ω. In the visual inspection, no cracks were confirmed in the electrode appearance; however, cracks occurred in the winding test at a diameter of 4 mm.

**[Table 5]**

| | Active material | Binder | | | Conductive additive | | Coating weight | Thickness^{*2} | Peel strength | Electrode through-plane resistance | Electrode appearance^{*3} (Visual inspection) | Winding test^{*4} | | | | |
|---|---|---|---|---|---|---|---|---|---|---|---|---|---|---|---|---|
| | LMO | Reference Example 5 Polymer^{*1} | SBR (solid component) | PVDF (solid component) | AB | CNT | | | | | | Metal rod diameter | | | | |
| | mass part | mass part | mass part | mass part | mass part | mass part | mg/cm² | µm | mN/mm | Ω | - | 10 mm | 8 mm | 6 mm | 4 mm | 2 mm |
| Example 18 | 95 | 2.5 | 1 | 0 | 0.5 | 1 | 28.8 | 122 | 16 | 17 | A | A | A | A | A | A |
| Example 19 | 95 | 2.5 | 0 | 1 | 0.5 | 1 | 28.4 | 108 | 12 | 8.6 | A | A | A | A | A | A |
| Comparative Example 2 | 95 | 3 | 0 | 0 | 1 | 1 | 29.2 | 130 | 2 | 7 | A | A | A | A | B | B |

| | | | | | | | | | | | | | | | | |
|---|---|---|---|---|---|---|---|---|---|---|---|---|---|---|---|---|
| *1: Chelating group-containing alginic acid (chelating polymer) produced in Reference Example 5 *2: Thickness of positive electrode mixture layer *3: Evaluation criteria for appearance observation: A: No cracks, B: Cracks present *4: Evaluation criteria for winding test: A: No crack occurrence, B: Crack occurrence | | | | | | | | | | | | | | | | |

### (Example 20)

A positive electrode was prepared in the same manner as in Example 10, except that, instead of the SBR emulsion, the aqueous sodium polyacrylate solution prepared in Reference Example 21 (aqueous sodium polyacrylate solution containing sodium polyacrylate having a weight-average molecular weight of 510,000 at a concentration of 13% by mass) was used. The coating weight of the positive electrode mixture layer was 24.7 mg/cm². The thickness of the positive electrode mixture layer was 83 µm, the peel strength was 9 mN/mm, and the electrode through-plane resistance was 4.4 Ω. In the visual inspection, no cracks were observed in the electrode appearance, and no cracks occurred in the winding test.

### (Example 21)

A positive electrode was prepared in the same manner as in Example 20, except that the amount of the chelating group-containing alginic acid produced in Reference Example 3 was changed to 1.5 parts by mass. The coating weight of the positive electrode mixture layer was 23.0 mg/cm². The thickness of the positive electrode mixture layer was 81 µm, the peel strength was 9 mN/mm, and the electrode through-plane resistance was 1.3 Ω. In the visual inspection, no cracks were observed in the electrode appearance, and no cracks occurred in the winding test.

**[Table 6]**

| | Active material | Binder | | Conductive additive | | Coating weight | Thickness^{*2} | Peel strength | Electrode through-plane resistance | Electrode appearance^{*3} (Visual inspection) | Winding test^{*4} | | | | |
|---|---|---|---|---|---|---|---|---|---|---|---|---|---|---|---|
| | LMO | Reference Example 3 Polymer^{*1} | Sodium polyacrylate (solid component) | AB | CNT | | | | | | Metal rod diameter | | | | |
| | mass part | mass part | mass part | mass part | mass part | mg/cm² | µm | mN/mm | Ω | - | 10 mm | 8 mm | 6 mm | 4 mm | 2 mm |
| Example 20 | 95 | 2.5 | 1 | 0.5 | 1 | 24.7 | 83 | 9 | 4.4 | A | A | A | A | A | A |
| Example 21 | 95 | 1.5 | 1 | 0.5 | 2 | 23.0 | 81 | 9 | 1.3 | A | A | A | A | A | A |

| | | | | | | | | | | | | | | | |
|---|---|---|---|---|---|---|---|---|---|---|---|---|---|---|---|
| *1: Chelating group-containing alginic acid (chelating polymer) produced in Reference Example 3 *2: Thickness of positive electrode mixture layer *3: Evaluation criteria for appearance observation: A: No cracks, B: Cracks present *4: Evaluation criteria for winding test: A: No crack occurrence, B: Crack occurrence | | | | | | | | | | | | | | | |

As is clear from the results shown in Tables 2 to 6, in all of the electrodes (positive electrodes) obtained in Examples 10 to 21, no cracks were observed in the winding test, indicating that the electrodes are rich in flexibility (bendability) and are unlikely to form cracks during winding, and also indicating that the electrodes have excellent workability during electrode preparation. In addition, with respect to all of the chelating group-containing alginic acids (chelating polymers) produced in Reference Examples 2 to 5 and used in Examples 10 to 21, in the evaluation of heavy-metal ion capture ability of the chelating polymers shown in Reference Examples 9 to 21, the manganese ion concentrations were all less than 1 ppm by mass. From these results, it is evident that, by using these chelating polymers, precipitation and deposition of manganese from the positive electrode active material onto the negative electrode active material can be suppressed. From such results, it can be understood that, by using the electrodes prepared in Examples 10 to 21, excellent charge-discharge characteristics can be imparted to batteries using the electrodes, and the cycle life of the batteries can also be extended.

### Industrial Applicability

As described above, according to the present disclosure, it is possible to provide a binder for a lithium-ion battery positive electrode and a slurry for forming a lithium-ion battery positive electrode mixture layer, each of which has excellent workability during electrode preparation and makes it possible to produce a battery having extended cycle life. Furthermore, by using the same, it is possible to provide a positive electrode for a lithium-ion battery and a lithium-ion battery, each of which has excellent charge-discharge characteristics and extended cycle life.

## Claims

1. A binder for a lithium-ion battery positive electrode, being for binding a positive electrode active material, a conductive additive and a current collector in a lithium-ion battery, and comprising a chelating group-containing polymer and a flexible polymer.

2. The binder for a lithium-ion battery positive electrode according to claim 1, wherein, in the chelating group-containing polymer, a chelating group is bonded to a polymer through a covalent bond and/or an ionic bond.

3. The binder for a lithium-ion battery positive electrode according to claim 1, wherein the flexible polymer is at least one selected from the group consisting of polyvinylidene fluoride and a copolymer thereof, and a polymer containing an aromatic vinyl monomer and an aliphatic conjugated diene monomer.

4. The binder for a lithium-ion battery positive electrode according to claim 1, wherein the flexible polymer is a dried product of an aqueous emulsion.

5. A slurry for forming a lithium-ion battery positive electrode mixture layer, being for forming a positive electrode mixture layer including the binder for a lithium-ion battery positive electrode according to claim 1, and comprising a positive electrode active material, a conductive additive, a chelating group-containing polymer, a flexible polymer and water.

6. A positive electrode for a lithium-ion battery, comprising the binder for a lithium-ion battery positive electrode according to claim 1.

7. A lithium-ion battery comprising the positive electrode for a lithium-ion battery according to claim 6.
